Europäisches Patentamt

European Patent Office

Office européen des brevets

(11) Veröffentlichungsnummer: **0 254 761**

**A1**

(12) # EUROPÄISCHE PATENTANMELDUNG

(21) Anmeldenummer: 86110503.9

(22) Anmeldetag: 30.07.86

(51) Int. Cl.⁴: **A01D 1/12**

(43) Veröffentlichungstag der Anmeldung:
03.02.88 Patentblatt 88/05

(84) Benannte Vertragsstaaten:
**AT BE CH DE FR GB IT LI LU NL SE**

(71) Anmelder: **Julius Cronenberg o.H.**
**Sophienhammer**
**D-5760 Arnsberg 1, Müschede(DE)**

(72) Erfinder: **Cronenberg, Dieter-Julius**
**Friedrich-Naumann-Strasse 1**
**D-5760 Arnsberg 1(DE)**
Erfinder: **Faflek, Jenö**
**Kronenstrasse 5**
**D-5760 Arnsberg 1 - Müschede(DE)**

(74) Vertreter: **Fritz, Herbert, Dipl.-Ing.**
**Mühlenberg 74**
**D-5760 Arnsberg 1(DE)**

(54) **Sense mit einstellbarer Befestigungsvorrichtung.**

(57) Die Befestigungsvorrichtung läßt eine doppelte Einstellung zu. Einmal kann das Sensenblatt um die Achse eines Gewindebolzens (30) geschwenkt werden, wenn die zugenhörige Mutter (34) gelöst ist. Zum anderen kann aber auch der Gewindebolzen (30) in einem Winkel zur Achse des Sensenbaumes eingestellt werden durch Lösen bzw. Festziehen einer Mutter (35). Diese Einstellung beruht auf einem Zwischenteil (50) mit Segmentquerschnitt. Am Zwischenteil ist eine radiale Zahnung (52) und eine parallele Zahnung (51) geformt.

Fig. 4

## "Sense mit einstellbarer Befestigungsvorrichtung"

Die Erfindung bezieht sich auf eine Sense mit einer einstellbaren Befestigungsvorrichtung mit den Merkmalen nach dem Oberbegriff des Hauptanspruches.

Eine Befestigungsvorrichtung dieser Art läßt eine zweifache Einstellung zu. Einmal ist der Winkel zwischen der Achse des Sensenblattes und der Achse des Sensenbaumes einstellbar je nach Arbeitsweise der Bedienungsperson, durch Schwenken der Sensenhamme um die Achse eines Gewindebolzens. Dabei besteht die Möglichkeit, das Sensenblatt für den Transport bis in eine Stellung neben dem Sensenbaum zu schwenken. Außerdem läßt die Befestigungsvorrichtung zu, den Winkel der Sensenhamme zur Achse des Sensenbaumes einzustellen, womit man erreichen will, daß das Sensenblatt beim Mähen stets eine bodenparallele Lage hat, auch wenn der Sensenbaum, je nach Größe der Person, eine mehr oder weniger steile Stellung hat. Während der Mäher diese auf seine Körpergröße bezogene Einstellung im allgemeinen nur einmal vornimmt, ist es üblich, jene Einstellung jedesmal dann vorzunehmen, wenn die Sense in einen transportgerechten Zustand gebracht werden soll.

Es ist (Belgisches Patent 579 067) eine Befestigungsvorrichtung der eingangs genannten Art bekannt, die von einer relativ komplizierten Bauart is und aus mehreren Einzelteilen besteht. Es ist dabei ein Zwischenteil mit einem Segmentquerschnitt vorgesehen, das eine Winkeleinstellung zur Sensenbaumachse zuläßt, doch bleibt dabei der Gewindebolzen zum Anschrauben der Sensenhamme in einer Querstellung zur Sensenbaumachse, so daß speziell geformte Widerlagerteile erforderlich sind. Ein besonderer Aufwand stellt dabei auch ein Schneckengetriebe dar, das erforderlich ist, um dem segmentförmigen Zwischenteil die erforderliche Winkelstellung zu geben.

Die Aufgabe, die sich aus diesem Stand der Technik ergibt, ist darin zu sehen, eine Sense mit einer einstellbaren Befestigungsvorrichtung so auszubilden, daß sie im Hinblick auf eine rationelle Fertigung konstruktiv einfach wird und daß die Handhabung bei der Einstellung erleichtert wird.

Diese Aufgabe wird durch eine Sense mit einer einstellbaren Befestigungsvorrichtung gelöst, welche die Merkmale aus dem kennzeichnenden Teil des Hauptanspruches aufweist.

Die Unteransprüche haben bevorzugte Ausführungsformen und weitere Ausgestaltungen zum Inhalt.

Es bedarf bei einer solchen Befestigungsvorrichtung zum Einstellen des Sensenblattwinkels keiner besonderen Getriebeteile, sondern es genügt die Mutter des Gewindebolzens an der gewölbten Seite des Lagers zu lösen, das Sensenblatt in die gewünschte Stellung zu bringen und die Mutter wieder fest anzuziehen. Bei der Einstellung macht der Gewindebolzen die Schwenkbewegung des Zwischenteils mit, da diese Teile drehfest miteinander verbunden sind. Der Gewindebolzen kann sich ungehindert bei der Schwenkbewegung in einer langgestreckten Ausnehmung des Lagerteils bewegen. Zwischenteil und Lagerteil können wirtschaftlich als Kunststoffteile hergestellt werden. Die Verbindung zwischen Lagerteil und Sensenbaum kann in einfacher Weise durch Einstecken eines angeformten Schaftes und durch Anbringen von Quernieten erfolgen.

Gemäß der weiteren Erfindung sind an den gewölbten Flächen des Zwischenteils und des Lagerteils parallele Zahnungen vorgesehen, die beim Festziehen der Mutter ineinandergreifen und somit durch Formschluß die eingestellte Winkellage des Zwischenteils sichern.

Zur Herstellung der Verbindung zwischen Sensenhamme und Zwischenteil ist das Gewinde des Gewindebolzens vorgesehen, das an der ebenen Seite des Zwischenteils vorsteht. Da dieses Gewinde stets eine Querlage zu der ebenen Fläche des Zwischenteils hat, bedarf es keiner speziell geformter Widerlager, sondern es genügt eine einfache flache Scheibe mit einer Mutter. Dadurch, daß die radialen Zahnungen am Zwischenteil einerseits und an der Sensenhamme andererseits ineinandergreifen, ist auch hier nach dem Festziehen der Mutter die Einstellung durch Formschluß gewährleistet. Das Lösen der Mutter an der ebenen Seite des Zwischenteils, was jedesmal dann vorgenommen wird, wenn das Sensenblatt neben den Sensenbaum gestellt werden soll, bleibt ohne Einfluß auf die Schraubverbindung an der gewölbten Seite.

Gemäß einer Weiterbildung der Erfindung ist die mit einer radialen Verzahnung versehene Sensenhamme in Gestalt eines Flansches fortgesetzt, der geeignet zum Anbringen eines auswechselbaren Sensenblattes aus Blech ist und an den zu diesem Zweck Gewindebohrungen zur Aufnahme von Senkkopfschrauben mit Innensechskant gebildet sind.

Im folgenden wird ein Ausführungsbeispiel der Erfindung beschrieben unter Bezugnahme auf die Zeichnungen.

Fig. 1 zeigt eine Draufsicht auf eine Sense im Bereich einer einstellbaren Befestigungsvorrichtung nach der Erfindung;

Fig. 2 ist ein Schnitt nach II-II von Fig. 1;

Fig. 3 ist eine Draufsicht auf die Hamme in Richtung des Pfeiles III von Fig. 4;

Fig. 4 ist ein Schnitt nach IV-IV von Fig. 1;

Fig. 5, 6 und 7 sind Ansichten eines Lagerteils der Befestigungsvorrichtung;

Fig. 8 und 9 sind Ansichten eines Zwischenteils der Befestigungsvorrichtung;

Fig. 10 ist eine Ansicht des dazu gehörigen Gewindebolzens.

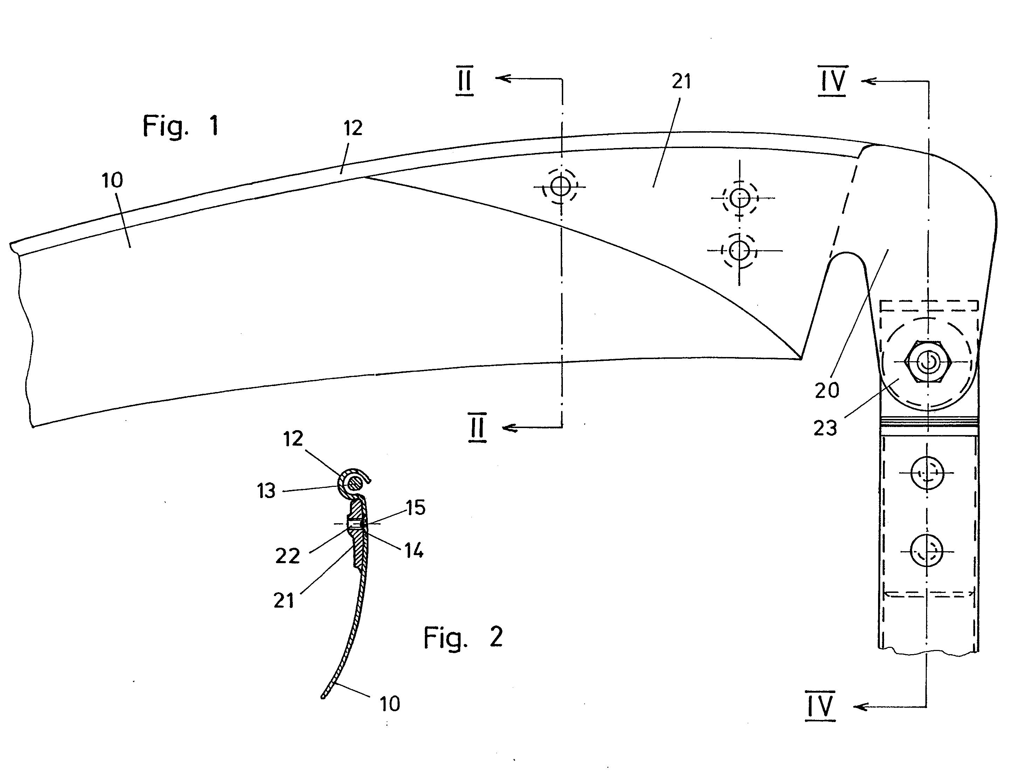

Gemäß Fig. 1 und 2 hat ein Sensenblatt 10 aus Blech am oberen Rand eine Verstärkung in Gestalt einer angeformten Rippe 12, die einen Verstärkungsdraht 13 einschließt. Dieses Sensenblatt ist zum Anschrauben an eine geschmiedete Hamme 20 vorgesehen, damit es bei Unbrauchbarkeit durch ein neues Sensenblatt ersetzt werden kann. Für die Verbindung mit der Hamme sind am Sensenblatt drei vertiefte Bohrungen 14 gebildet, geeignet zur Aufnahme von Senkkopfschrauben 15 mit einem Innensechskant.

Die geschmiedete Hamme 20 weist zum Anschrauben des Sensenblattes 10 einen Fortsatz in Gestalt eines dreieckförmigen Flansches 21 auf, an welchem das Sensenblatt 10 anliegend angeschraubt wird. Zur Aufnahme der Senkkopfschrauben 15 sind an dem Flansch 21 der Hamme Gewindebohrungen 22 gebildet.

In an sich bekannter Weise hat die Hamme 20 auch eine Bohrung 24 zur Aufnahme eines Gewindebolzens 30 der Befestigungsvorrichtung. Um die Bohrung 24 herum ist eine radiale Zahnung 23 geformt.

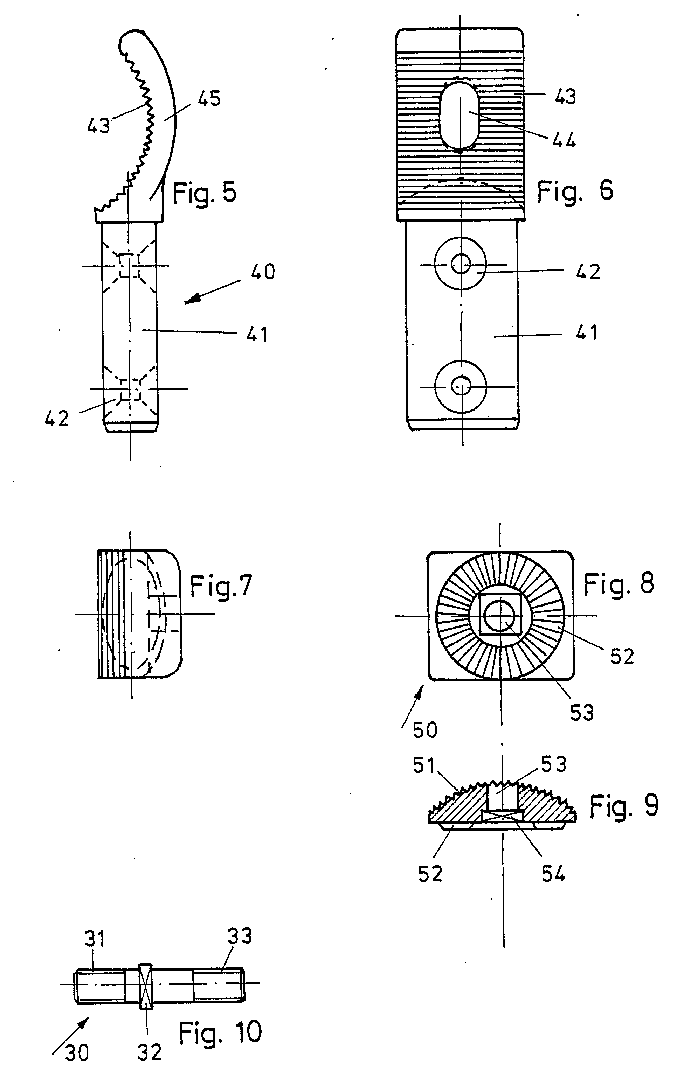

Die Einzelteile der Befestigungsvorrichtung sind auf Fig. 5 bis 10 dargestellt. Es handelt sich dabei um ein Lagerteil 40 aus Kunststoff mit einem Schaft 41, der in einen Sensenbaum 11 eingesteckt werden kann und der einen eliptischen Querschnitt hat, weil die Sensenbäume in der Regel aus einem Rohr mit einem solchen Querschnitt bestehen. Zur Aufnahme von Nietverbindungen sind am Schaft Bohrungen 42 vorgesehen. An den Schaft schließt sich ein von der Seite gesehen sichelförmiges Lager 43 an mit einer konkaven Lagerfläche, an welcher parallele Sägezähne geformt sind. Rückseitig ist das Lager durch eine konvexe Wölbung 45 begrenzt. Am Lager ist eine langgestreckte Ausnehmung 44 gebildet.

Das Lager nimmt ein segmentförmiges Zwischenteil 50 auf, das ebenfalls aus Kunststoff besteht. An der gewölbten Fläche ist eine parallele Zahnung 51 gebildet, an der ebenen Fläche eine radiale Zahnung 52. Das Zwischenteil wird von einer zentrischen Bohrung 53 zur Aufnahme eines Gewindebolzens durchdrungen, wobei die Bohrung an der ebenen Seite des Zwischenteils in eine Vierkant-Ausnehmung 54 übergeht.

Der dazu gehörige Gewindebolzen 30, dargestellt auf Fig. 10, hat in jedem Endbereich ein Gewinde, also ein Gewinde 31 und ein Gewinde 33 und dazwischen ist er als Vierkant 32 ausgebildet. Zu den Gewinden 31 und 33 gehören die Muttern 34 und 35.

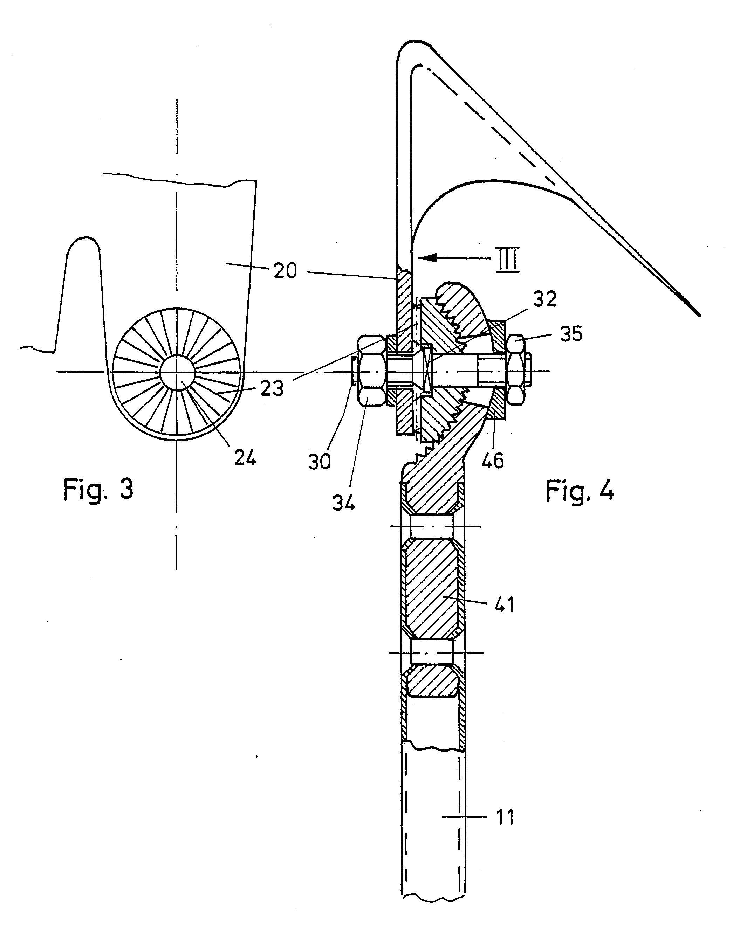

Fig. 4 gibt Aufschluß, in welcher Weise die Teile zusammengesetzt sind. Die gewölbte Zahnung 51 des Zwischenteils 50 liegt in dem gezahnten Lager 43. An der ebenen Fläche 52 des Zwischenteils liegt die Sensenhamme an, wobei ebenfalls die Verzahnungen 23 und 52 ineinandergreifen. Die Verbindung ist durch den Gewindebolzen 30 hergestellt und die dazu gehörigen Muttern 34 und 35. Der Vierkant 32 des Gewindebolzens wird von der Ausnehmung 54 des Zwischenteils aufgenommen. Zwischen der Mutter 34 und der Sensenhamme 20 liegt eine flach Scheibe. An der Wölbung 45 des Lagerteils liegt eine Widerlagerscheibe 46 an, welche mit einer konkav gewölbten Fläche an der Wölbung 45 anliegt und wobei die Ausnehmung 44, durch welche der Bolzen hindurchgeht, überbrückt wird.

Wenn der Benutzer der Sense den Winkel des Sensenblattes so einstellen will, daß das Sensenblatt in Bezug auf die Stellung des Sensenbaumes, und seiner Körpergröße entsprechend, bodenparallel ist, so braucht er nur die Mutter 35 zu lockern, das Zwischenteil 50 so einzustellen, daß die ebene Fläche und damit die Sensenhamme einen entsprechenden Winkel zur Achse des Sensenbaumes einnimmt und die Mutter 35 wieder fest anzuziehen. Durch die Verzahnung ergibt sich ein guter Formschluß. Unabhängig von dieser Einstellung kann die Drehstellung der Sense um die Achse des Gewindebolzens durch Lockern der Mutter 34 eingestellt werden, wobei sich durch Festziehen der Mutter 34 gleichfalls ein guter Formschluß durch die Zahnung von Hamme und Zwischenteil ergibt. Die Schraubverbindung läßt es auch zu, das Sensenblatt nach der Arbeit für den ungefährlichen Transport so weit zu schwenken, daß es neben dem Sensenbaum zu liegen kommt.

## Ansprüche

1. Sense mit einstellbarer Befestigungsvorrichtung mit den Merkmalen:
-es ist ein Lagerteil vorgesehen, das vorne am Sensenbaum in Verlängerung der Sensenbaumachse anbringbar ist und das einen quergerichteten Gewindebolzen aufnimmt, an dessen vorstehenden Ende die Sensenhamme angeschraubt werden kann;
-die Schraubverbindung schließt ein segmentförmiges Zwischenteil ein, dessen gewölbte Fläche von einer entsprechend gewölbten Fläche des Lagerteils aufgenommen ist und dessen ebene Fläche die Winkelstellung der Sensenhamme bestimmt;

gekennzeichnet durch die nachfolgend genannten Merkmale:

- der Gewindebolzen (30) wird drehfest vom Zwischenteil (50) aufgenommen, er ist durch eine langgestreckte Ausnehmung (44) des Lagerteils (40) geführt, nimmt im Anschluß daran eine Widerlagerscheibe (46) auf, welche die Ausnehmung überbrückend mit einer Wölbung an einer rückseitigen Wölbung (45) anliegt und nimmt im Anschluß daran eine Feststellmutter (35) auf.

2. Befestigungsvorrichtung nach Anspruch 1, dadurch gekennzeichnet, daß ein Vierkant (32) des Gewindebolzens von einer entsprechenden Ausnehmung (54) des Zwischenteils aufgenommen wird.

3. Befestigungsvorrichtung nach Anspruch 1, dadurch gekennzeichnet, daß die gewölbten Flächen des Zwischenteils und des Lagerteils ineinandergreifende, parallele Zahnungen (51) aufweisen.

4. Befestigungsvorrichtung nach Anspruch 1, dadurch gekennzeichnet, daß eine radiale Zahnung (52) des Zwischenteils (50) und eine radiale Zahnung (23) der Sensenhamme ineinandergreifen.

5. Befestigungsvorrichtung nach Anspruch 1, dadurch gekennzeichnet, daß die mit einer radialen Zahnung (23) versehene Sensenhamme in Gestalt eines Flansches (21) fortgesetzt ist, geeignet zur Anlage eines aus Bleck bestehenden, auswechselbaren Sensenblattes (10), wobei am Flansch zur Herstellung einer Verbindung Gewindebohrungen (22) gebildet sind.

Fig. 1

Fig. 2

10
12
21
II
II
IV
IV
20
23

15
14
12
13
22
21
10

Fig. 3

Fig. 4

Fig. 5

43  45

40

41

42

Fig. 6

43

44

42

41

Fig. 7

Fig. 8

52

53

50

51  53

Fig. 9

52  54

31  33

Fig. 10

30  32

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 946 017 (GESELLSCHAFT DER LUDW. VON ROLL'SCHEN EISENWERKE A.-G.) * Anspruch 3; Figuren 1, 4 * | 1,2 | A 01 D 1/12 |
| Y | | 3-5 | |
| | --- | | |
| Y | CH-A- 46 273 (JULIUS CRONENBERG OHG) * Figuren 4, 6-8; Seite 2, Spalte 1, Zeilen 14-19 * | 3 | |
| | --- | | |
| Y | US-A-1 968 340 (W. GLIDDEN) * Seite 1, Zeilen 24-33; Figur 1 * | 4,5 | |
| | --- | | RECHERCHIERTE SACHGEBIETE (Int. Cl.4) |
| Y | DE-C- 47 711 (J.B. REVOLLIER) * Figur 2; Seite 1, Spalte 2, Zeilen 1-8 * | 4 | A 01 D 1/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 03-03-1987 | SAMWEL P.N. |